# EUROPEAN PATENT SPECIFICATION

(11) **EP 3 231 546 B1**
(45) Date of publication and mention of the grant of the patent: **15.05.2019**
(21) Application number: 17166192.9
(22) Date of filing: 12.04.2017
(51) Int. Cl.: B23K 11/11, B23K 11/25, B23K 11/31

(54) **RESISTANCE WELDING DEVICE WITH A LOAD SENSOR**
WIDERSTANDSSCHWEISSVORRICHTUNG MIT EINEM KRAFTSENSOR
DISPOSITIF DE SOUDAGE PAR RÉSISTANCE AVEC UN CAPTEUR D'EFFORT

(30) Priority: 13.04.2016 IT UA20162535
(43) Date of publication of application: 18.10.2017
(73) Proprietor: Tecna S.p.A., 40024 Castel San Pietro Terme (IT)
(72) Inventor: DAPORTO, Marco, 40060 Dozza BO (IT); GUBELLINI, Fabio, 40026 Imola BO (IT)
(74) Representative: Modiano, Micaela Nadia

(56) References cited:
- DE-A1- 10 315 384
- DE-A1- 10 344 056
- US-A- 5 321 225
- US-A- 6 066 824

## Description

The present invention relates to a resistance welding device according to the preamble of claim 1 (see, for example, US6 066 824).

As is known, industrial activities such as welding are ever more often automated: this in fact ensures higher repeatability of the production process, allows to rely on a significant saving in labor costs and to avoid the involvement of the operator in processes that might endanger his/her safety.

In this context, therefore, anthropomorphic robots are widespread which use resistance welding devices constituted by a gun which has, at the ends of the jaws, a pair of electrodes that are indeed assigned to welding.

Among the systems outlined above, recently a growing demand has been observed for solutions capable of ensuring continuous monitoring of the value of the closing force (torque) with which the electrodes are clamped around the parts to be welded, since evidently this parameter influences significantly the quality of the weld.

According to traditional methods, robotized islands are known in which there are calibration stations, to which the robot periodically returns, for checking and optionally recalibrating the closing force.

These constructive solutions are by now inadequate, since they are affected by two drawbacks that limit greatly their desirability.

First of all, in fact, in order to reach these stations and perform calibration, the robot is necessarily forced to interrupt the welding activities temporarily, causing an unwelcome decrease in productivity.

Moreover, it should be noted that these solutions do not provide actual continuous monitoring but perform spot checks of the behavior of the closure force (and an increase in the checks in the unit time, in order to approximate continuous monitoring, evidently would be a further detriment to the productivity of the system).

More advanced constructive solutions have thus become widespread which control the nominal current delivered to the motor, since, as is known, if the value of the current is known it is possible to obtain the desired torque value by means of a parameter known as "torque constant".

However, even these constructive solutions are not free from drawbacks.

There are in fact several factors which, independently of the closing force or torque, influence and vary the torque constant (for example, the temperature and humidity of the environment, the temperature of the motor or of the lubricant).

Therefore, even this control mode does not reveal itself to be sufficiently reliable, since tests performed in the field have highlighted that for an equal delivered nominal current it is possible to observe oscillations of even 15% of the motor torque value.

The aim of the present invention is to solve the problems described above, by providing a resistance welding device that performs a satisfactory continuous checking of the welding parameters.

Within this aim, an object of the invention is to provide a resistance welding device in which checking of the welding parameters is not influenced by external parameters.

Another object of the invention is to provide a resistance welding device that ensures high reliability in operation.

Another object of the invention is to propose a device that adopts a technical and structural architecture that is alternative to those of devices of the known type.

Another object of the invention is to provide a resistance welding device that has modest costs, is safe in application and can be obtained easily starting from commonly commercially available elements and materials.

A resistance welding device according to the present invention is defined in claim 1.

Further embodiments of the present invention are defined in the dependent claims.

Further characteristics and advantages of the invention will become better apparent from the description of a preferred but not exclusive embodiment of the resistance welding device according to the invention, illustrated by way of nonlimiting example in the accompanying drawings, wherein:

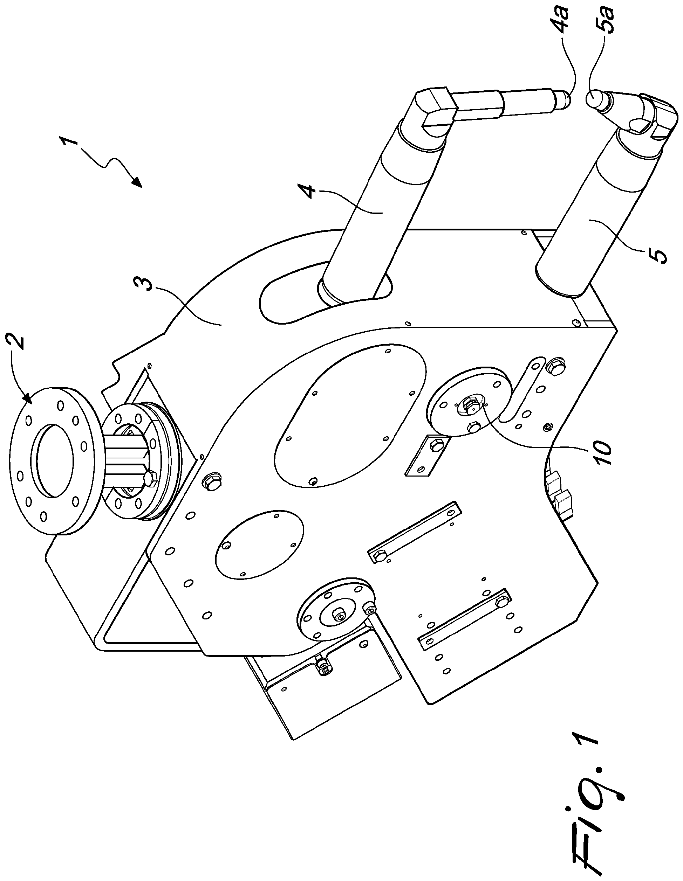

Figure 1 is a perspective view of the welding device according to the invention;

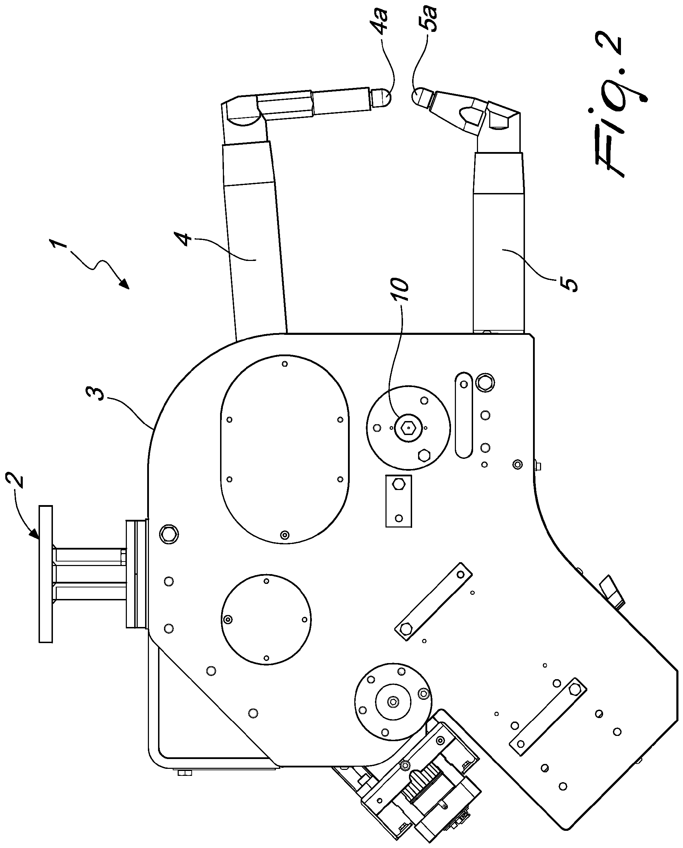

Figure 2 is a side elevation view of the device of Figure 1;

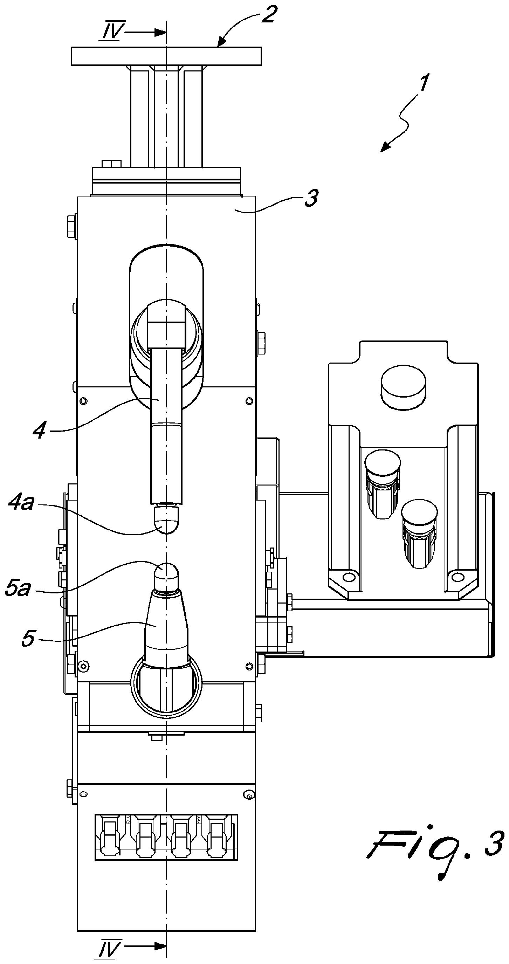

Figure 3 is a front elevation view of the device of Figure 1;
Figure 4 is a sectional view of Figure 3, taken along the line III-III,
Figure 5 is a highly enlarged-scale view of a detail of Figure 4.

With reference to the figures, the reference numeral 1 generally designates a resistance welding device, which can be used validly, in the preferred application, by an anthropomorphic robot, for example by anchoring to an arm of the robot a coupling 2, which protrudes upward from a casing 3 of the device 1.

It is useful to specify from the outset, however, that the use described above, in association with an anthropomorphic robot or in any case with the possibility of movement, constitutes a preferred but not exclusive use of the invention. The device 1 can in fact be used effectively in different modes and in various contexts, both industrial and nonindustrial, without thereby abandoning the protective scope claimed herein.

The device 1 therefore comprises means for the mutual movement of a pair of jaws 4, 5, which support respective electrodes 4a, 5a, through which an electric current can flow.

Mutual movement of the jaws 4, 5 therefore allows to pass from an inactive configuration to an active configuration, and vice versa.

In the inactive configuration, the electrodes 4a, 5a are mutually spaced and typically are not crossed by an electric current, since they are kept inactive.

In the active configuration, the electrodes 4a, 5a are moved mutually closer (almost in mutual contact) and current flows through them: according to methods that are known so far, it is thus possible to clamp and simultaneously weld elements of various kinds, previously interposed between the electrodes 4a, 5a.

The movement means therefore comprise a drive unit of a mechanism 6 which is associated with a jaw 4: the mutual movement of the jaws 4, 5 is obtained by moving the movable jaw 4 closer or further away from the other jaw 5, which is kept fixed.

According to the invention, the device 1 comprises a force sensor 7, which is associated with an element of the mechanism 6, for detecting the constraining reaction generated by the element (at least) in the clamping configuration: this reaction evidently is linked directly to the clamping force of the electrodes 4a, 5a and the measurement of the former thus allows to know the latter.

In practice, in other words, the choice to arrange a sensor 7 along the mechanism 6 allows the monitoring of the welding parameters (and in particular indeed the welding force or torque) directly, by detecting a constraining reaction that is generated and transmitted indeed by the clamping action of interest.

In accordance with the present invention, the mechanism 6 comprises a gear system 8 which is actuated indirectly by the drive unit and is arranged even indirectly in connection with a lever 9.

In turn, the lever 9 is associated with the jaw 4 and is articulated to a fixed pivot 10, so as to actuate the rotation of the jaw 4 between the two configurations described above.

The gear system 8 therefore comprises a screw 11, which is arranged even indirectly in rotation about its own longitudinal axis by the drive unit, and an element 12 that is shaped complementarily to the screw 11 and is functionally associated with the lever 9; the element 12 can be of various kinds and can mesh with the screw 11 in various manners, without abandoning the protective scope claimed herein.

It is indeed the axial constraining reaction, generated in the clamping configuration by the screw 11, which in turn constitutes the element mentioned above, that is detected by the sensor 7.

It is useful in any case to specify that the detection, by means of the sensor 7, of other constraining reactions generated by different elements of the mechanism 6, is not excluded, without thereby abandoning the protective scope claimed herein.

More particularly, the gear system 8 is (preferably but not exclusively) constituted by a ballscrew, which therefore comprises the screw 11 and the element 12, constituted by a nut.

According to the present invention, the device 1 comprises a fixed frame, which supports rotatably, optionally indirectly, the screw 11 by means of a respective bearing assembly 13.

The bearing assembly 13 comprises at least one first bearing 14 and at least one thrust bearing 15: axial thrusts and constraining reactions directed in a first direction (which corresponds to the stresses generated at the inactive configuration) can thus be discharged onto the thrust bearing 15. Vice versa, the first bearing 14 is chosen so as to offer no thrust bearing function and not bear axial loads. The first bearing 14 therefore allows the axial displacements of the screw 11 caused by the constraining reaction generated in the clamping configuration, which can thus be detected consequently by means of the force sensor 7, which is indeed arranged along the trajectory of the screw 11 that is defined by said axial displacements (therefore along the axis of the screw 11).

In practice, in other words, the bearing assembly 13 is unable to compensate and discharge the constraining reaction that is generated upon the closure of the electrodes 4a, 5a (but only the oppositely oriented one), and thus the screw 11 usefully transmits the force to the sensor 7, which measures it in order to achieve the intended aim.

In the preferred constructive solution, illustrated merely by way of example in the accompanying figures, the first bearing 14 is a cylindrical roller bearing, while the thrust bearing 15 is a conical roller bearing.

It is useful in any case to specify that the protection is to be understood as extended to different types of bearing, so long as they are able to ensure the behavior described above (and in particular the possibility of small axial displacements as a consequence of the constraining reaction generated in the active configuration).

Furthermore, it is useful to specify that the protection claimed herein is extended to bearing assemblies 13 in which there are two or more first bearings 14 and/or two or more thrust bearings 15, be they of the already mentioned type (respectively cylindrical roller bearings and conical roller bearings) or others, in any case suitable for the aim and objects described above.

It should also be noted that in the solution shown in the accompanying figures the first bearing 14 and the thrust bearing 15 are accommodated in a containment casing 16, which in turn is anchored to the frame (i.e., to the rigid structure of the device 1, which comprises the external casing 3 and the other components that are integral therewith).

In practice, the screw 11 protrudes in a cantilever manner from the casing 16.

According to the present invention, the sensor 7 is chosen between a strain gauge and a load cell, which operate according to any one of the various known operating modes.

Further according to the present invention, the sensor 7 axially faces and is proximate to a first end 11a of the screw 11 which lies opposite the lever 9, indeed in order to monitor the locking force of the electrodes 4a, 5a by detecting the axial displacements caused on the screw 11 by the constraining reaction.

The signal amplification board is preferably arranged proximate to the sensor 7.

According to the present invention, the end 11a of the screw 11 is coupled to an axial ball bearing 17, which in turn is mounted on a respective supporting disk 18, which is free to slide axially.

In this manner, the axial bearing 17 transmits the constraining reaction of the screw 11 in rotation to the disk 18, which does not rotate (otherwise it would not be possible to perform effective reading by means of the sensor 7) but is indeed allowed only small axial movements. The sensor 7 in fact measures the axial sliding of the disk 18.

In order to be able to achieve the free axial movement of the disk 18, said disk is centered slidingly on two guiding pins.

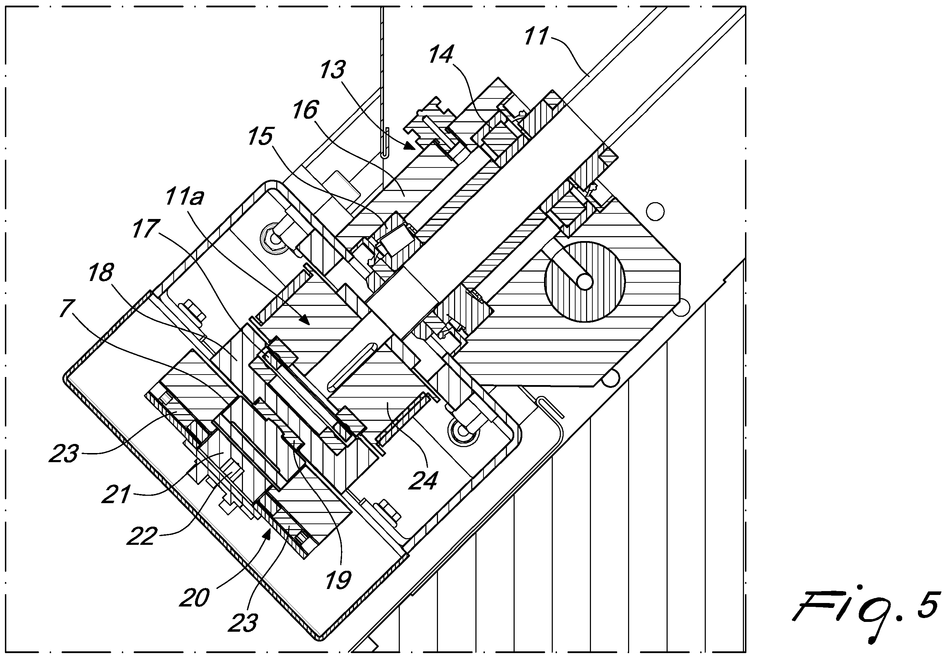

Even more particularly, between the sensor 7 and the disk 18 a centering plate 19 is interposed (shown for the sake of simplicity only in Figure 5 and indeed substantially in contact with the sensor 7).

The centering plate 19 allows to eliminate any kind of force that is not of an axial type with respect to the sensor 7, thus avoiding any interference for measurement.

According to the present invention, the device 1 comprises an assembly 20 for adjusting the axial position of the sensor 7, in order to identify the correct preloading and compensate for any play.

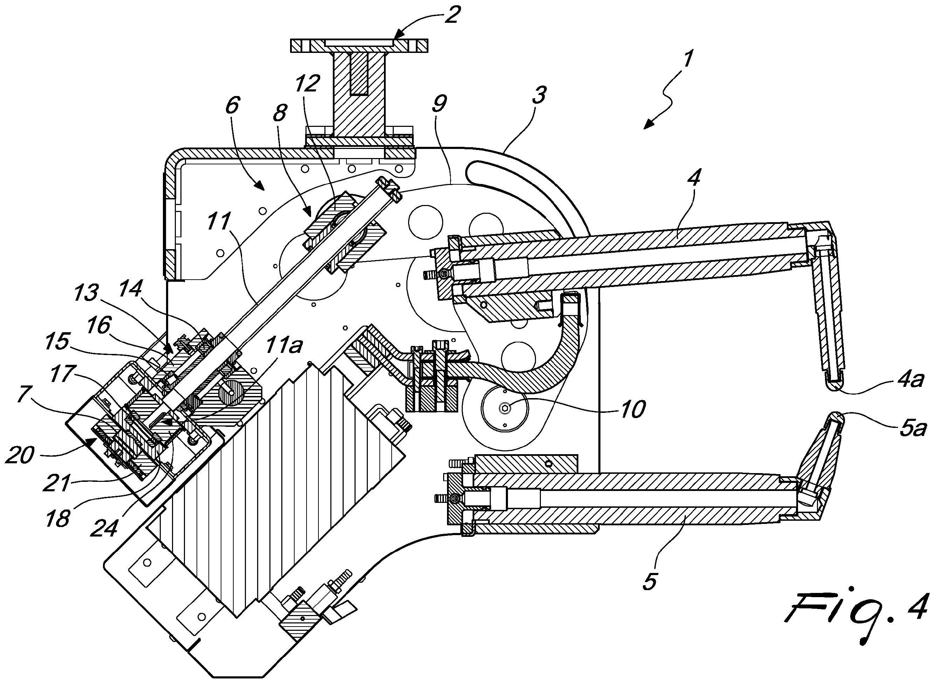

According to the present invention (Figure 4 and especially Figure 5), the adjustment assembly 20 comprises a supporting plate 21 for the sensor 7, which is arranged opposite the disk 18 with respect to the sensor 7.

The supporting plate 21 can be moved axially by means of a respective adjustment grub screw 22, which has a fine pitch (shown for the sake of simplicity only in Figure 5), until it indeed reaches the desired axial position and can then be locked (after indeed reaching the desired position) by means of respective radial stop grub screws 23 (Figure 5), typically of the type with a copper bearing.

Evidently, the axial movement of the supporting plate 21 actuated by means of the adjustment grub screw 22 allows to press appropriately the sensor 7 against the disk 18 and the centering plate 19 in order to indeed obtain optimum readings.

Usefully, the drive unit is constituted by an electric motor, preferably of the type of brushless motors, and is connected to the screw 11 by means of a belt, which is wound around the output shaft of the motor and a pulley 24, which is axially integral with the screw 11.

Operation of the device according to the invention is therefore as follows.

By sending electric current to the electrodes 4a, 5a when they are arranged in the active configuration and mutually clamp two or more components, it is possible to achieve the welding thereof.

The mutual movement of the jaws 4, 5 from the inactive configuration to the active configuration (and vice versa) is obtained by means of an adapted mechanism 6: in an entirely particular and innovative manner, as shown in the device 1, the sensor 7 acts directly in association with the mechanism 6 (and in particular with the screw 11) thus detecting directly the force (or torque) generated at the electrodes 4a, 5a in the active configuration.

In greater detail, the movement of the jaw 4 is actuated by a drive unit (an electric motor) which, by means of a belt and a pulley 24, turns the screw 11 (which is a rolled ballscrew), while the jaw 5 is kept fixed. The screw 11 engages the element 12 (preferably a nut), which in turn is associated with the lever 9, the rotation of which about the fixed pivot 10 indeed causes the movement of the jaw 4.

In the active configuration, the welding parameter that one is interested in measuring, i.e., the clamping force or torque, is evidently directly correlated to the constraining reactions which, as a consequence of said clamping, are generated on the various elements of the mechanism 6 and in particular to the axial constraining reaction generated by the screw 11.

By virtue of the choice to resort to a bearing assembly 13 that does not contrast the small axial displacements caused on the screw 11 by the constraining reaction mentioned earlier (but only those that are oppositely oriented), it is possible to detect said reaction and therefore the clamping force by virtue of the sensor 7, which is arranged along the trajectory of the screw 11 (and more precisely faces and is proximate to the first end 11a).

In order to be able to detect an axial displacement on a rotating screw 11, by means of a static element such as the sensor 7, the axial bearing 17 and the supporting disk 18 are effectively interposed between said sensor and the screw 11.

Furthermore, as already noted, the device 1 is equipped, according to the present invention, with an adjustment assembly 20: by acting on the adjustment grub screw 22 and consequently on the supporting plate 21 it is possible to eliminate the plays that are present and provide the correct preloading to the sensor 7; once this has been done, the sensor 7 is then completely locked by two radial stop grub screws 23 with copper tip, which act as unscrewing-preventing elements and therefore are used to prevent the sensor 7 from losing its correct preloading.

The device 1 therefore allows to read the force during welding (in the active configuration) continually.

The force sensor 7 arranged in axial alignment with the screw 11 reads directly a force generated by an axial compression stress; the measurement that is performed is therefore independent of the rigidity of the system and is linked directly to the closing force of the movable jaw 4.

Differently from what occurs with solutions of the conventional type, evidently the measurement is also not affected by external factors (atmospheric or others) which otherwise might compromise the quality of the reading.

In this context, it should also be noted that the sensor 7 is arranged within the casing 3, in a position that is sheltered and protected with respect to the welding area (as a further confirmation of independence from external parameters).

Moreover, the position chosen for the sensor 7 is very practical and convenient for the corresponding wirings.

In practice it has been found that the device according to the invention fully achieves the intended aim and objects, since resorting to a force sensor which is associated with an element of the mechanism that is responsible for moving the movable jaw allows to detect the constraining reaction generated by said element in the clamping configuration and therefore the clamping force of the electrodes, thus performing a satisfactory continuous check of the welding parameters.

The invention thus conceived is susceptible of numerous modifications and variations, all of which are within the scope of the appended claims; all the details may further be replaced with other technically equivalent elements.

In the exemplary embodiments shown, individual characteristics, given in relation to specific examples, may actually be interchanged with other different characteristics that exist in other exemplary embodiments.

In practice, the materials used, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A resistance welding device, comprising means for mutually moving a pair of jaws (4, 5), which support respective electrodes (4a, 5a) that can be crossed by an electric current, for transition from an inactive configuration, in which said electrodes (4a, 5a) are mutually spaced, to an active configuration, in which said electrodes (4a, 5a) are mutually closer and crossed by current, for the clamping and welding of elements of various types, and vice versa, said movement means comprising a drive unit of a mechanism (6) associated with one of said jaws (4), said device (1) comprising a force sensor (7), associated with an element of said mechanism (6), for detecting the constraining reaction generated by said element in said clamping configuration, which is linked directly to the clamping force of said electrodes (4a, 5a), said mechanism (6) comprising a gear system (8) that is actuated by said drive unit and is arranged even indirectly in connection with a lever (9), which is associated with one of said jaws (4) and is articulated to a fixed pivot (10), for actuating the rotation of said jaw (4) between said configurations, said gear system (8) comprising a screw (11), which is turned even indirectly about its own longitudinal axis by said unit, and an element (12) that is complementary to said screw (11) and is functionally associated with said lever (9), the axial constraining reaction generated in said clamping configuration by said screw (11), which constitutes said element, being detected by said sensor (7), said device (1) further comprising a fixed frame which supports rotatably, even indirectly, said screw (11) by means of a respective bearing assembly (13), said bearing assembly (13) comprising at least one first bearing (14) and at least one thrust bearing (15), in order to allow axial displacements of said screw (11) produced by said constraining reaction generated in said clamping configuration, and the consequent detection of said constraining reaction by means of said force sensor (7) arranged along the trajectory of said screw (11) defined by said axial displacements, **characterized in that** said sensor (7) is chosen between a strain gauge and a load cell and faces axially and is proximate to a first end (11a) of said screw (11), which lies opposite said lever (9), for monitoring the clamping force of said electrodes (4a, 5a) by means of the detection of the axial displacements produced by said constraining reaction, said end (11a) of said screw (11) being coupled to an axial ball bearing (17), which is mounted on a respective supporting disk (18) and is free to slide axially, the axial sliding of said disk (18) being measured by said sensor (7), said device (1) further comprising an assembly (20) for adjusting the axial position of said sensor (7), in order to identify correct preloading and compensation for any play, said adjustment assembly (20) comprising a plate (21) for supporting said sensor (7), which is arranged opposite said disk (18) with respect to said sensor (7), said supporting plate (21) being axially movable by means of a respective adjustment grub screw (22), until the desired axial position is reached, and being lockable by means of respective radial stop grub screws (23).

2. The device according to claim 1, **characterized in that** a centering plate (19) is interposed between said sensor (7) and said disk (18).

3. The device according to one or more of the preceding claims, **characterized in that** said gear system (8) is constituted by a ballscrew, which comprises said screw (11) and said element (12), constituted by a nut.

4. The device according to one or more of the preceding claims, **characterized in that** said drive unit is constituted by an electric motor, preferably of the type of brushless motors, and is connected to said screw (11) by means of a belt wound around the output shaft of said motor and around a pulley (24), which is coaxially integral with said screw (11).

## Patentansprüche

1. Eine Widerstandsschweißvorrichtung, die Mittel zum Bewegen eines Paares von Klauen (4, 5) im Verhältnis zueinander umfasst, die entsprechende Elektroden (4a, 5a) tragen, welche von einem elektrischen Strom durchquert werden können, zum Übergang aus einer inaktiven Konfiguration, in der die Elektroden (4a, 5a) voneinander beabstandet sind, in eine aktive Konfiguration, in der die Elektroden (4a, 5a) näher beieinander liegen und von Strom durchquert werden, zum Klemmen und Verschweißen von Elementen verschiedener Art, und umgekehrt, wobei die Bewegungsmittel eine Antriebseinheit eines Mechanismus (6) umfassen, der mit einer der Klauen (4) verbunden ist, wobei die Vorrichtung (1) einen Kraftsensor (7) umfasst, verbunden mit einem Element des Mechanismus (6), zur Erfassung der Einspannreaktion, die von dem Element in der Klemmkonfiguration erzeugt wird und direkt mit der Klemmkraft der Elektroden (4a, 5a) verknüpft ist, wobei der Mechanismus (6) ein Getriebesystem (8) umfasst, das von der Antriebseinheit angetrieben und selbst indirekt in Verbindung mit einem Hebel (9) angeordnet ist, der mit einer der Klauen (4) verbunden und gelenkig mit einem festen Drehpunkt (10) zum Antreiben der Drehung der Klaue (4) zwischen den Konfigurationen verbunden ist, wobei das Getriebesystem (8) eine Schraube (11) umfasst, die selbst indirekt von der Einheit um ihre eigene Längsachse gedreht wird, und ein Element (12), das komplementär zu der Schraube (11) und funktionell mit dem Hebel (9) verbunden ist, wobei die axiale Einspannreaktion, die in der Klemmkonfiguration von der Schraube (11) erzeugt wird, die das Element darstellt, von dem Sensor (7) erfasst wird, wobei die Vorrichtung (1) weiter einen festen Rahmen umfasst, welcher drehbar, selbst indirekt, über einen entsprechenden Lageraufbau (13) die Schraube (11) trägt, wobei der Lageraufbau (13) mindestens ein erstes Lager (14) und mindestens ein Drucklager (15) umfasst, um axiale Verschiebungen der Schraube (11), die durch die in der Klemmkonfiguration erzeugte Einspannreaktion erzeugt werden, und die resultierende Erfassung der Einspannreaktion durch den Kraftsensor (7), der entlang der Trajektorie der Schraube (11) angeordnet ist, bestimmt durch die axialen Verschiebungen, zu ermöglichen, **dadurch gekennzeichnet, dass** der Sensor (7) gewählt ist aus einem Dehnungsmessgerät und einer Wägezelle und axial einem ersten Ende (11a) der Schraube (11) zugewandt ist und an dasselbe angrenzt, das dem Hebel (9) gegenüberliegt, zur Überwachung der Klemmkraft der Elektroden (4a, 5a) durch Erfassung der axialen Verschiebungen, die durch die Einspannreaktion erzeugt werden, wobei das Ende (11a) der Schraube (11) mit einem Axialkugellager (17) gekoppelt ist, welches auf einer entsprechenden Stützscheibe (18) montiert und frei ist, um axial zu gleiten, wobei das axiale Gleiten der Scheibe (18) von dem Sensor (7) gemessen wird, wobei die Vorrichtung (1) weiter einen Aufbau (20) zur Anpassung der axialen Position des Sensors (7) umfasst, um eine korrekte Vorbelastung und Kompensation eventuellen Spiels zu bestimmen, wobei der Anpassungsaufbau (20) eine Platte (21) zum Tragen des Sensors (7) umfasst, die mit Bezug auf den Sensor (7) gegenüber der Scheibe (18) angeordnet ist, wobei die tragende Platte (21) mit Hilfe eines entsprechenden Gewinde-Stellstifts (22) axial beweglich ist, bis die gewünschte axiale Position erreicht ist, und mit Hilfe entsprechender radialer Anschlag-Gewindestifte (23) arretierbar ist.

2. Die Vorrichtung gemäß Anspruch 1, **dadurch gekennzeichnet, dass** eine Zentrierplatte (19) zwischen dem Sensor (7) und der Scheibe (18) angeordnet ist.

3. Die Vorrichtung gemäß einem oder mehreren der obigen Ansprüche, **dadurch gekennzeichnet, dass** das Getriebesystem (8) aus einer Kugelumlaufspindel besteht, die die Schraube (11) und das Element (12), das aus einer Mutter besteht, umfasst.

4. Die Vorrichtung gemäß einem oder mehreren der obigen Ansprüche, **dadurch gekennzeichnet, dass** die Antriebseinheit aus einem Elektromotor, vorzugsweise vom Typ bürstenloser Motoren, besteht und mit der Schraube (11) über einen Riemen verbunden ist, der um die Abtriebswelle des Motors und um eine Riemenscheibe (24) gewunden ist, die koaxial integral mit der Schraube (11) ist.

## Revendications

1. Dispositif de soudage par résistance, comportant des moyens pour déplacer mutuellement une paire de mâchoires (4, 5), qui supportent des électrodes (4a, 5a) respectives qui peuvent être parcourues par un courant électrique, pour une transition d'une configuration inactive, dans laquelle lesdites électrodes (4a, 5a) sont mutuellement espacées, à une configuration active, dans laquelle lesdites électrodes (4a, 5a) sont mutuellement rapprochés et parcourues par un courant, pour le serrage et le soudage d'éléments de différents types, et vice versa, lesdits moyens de déplacement comportant une unité d'entraînement d'un mécanisme (6) associé à l'une desdites mâchoires (4), ledit dispositif (1) comportant un capteur de force (7), associé à un élément dudit mécanisme (6), pour détecter la réaction de contrainte générée par ledit élément dans ladite configuration de serrage, qui est directement liée à la force de serrage desdites électrodes (4a, 5a), ledit mécanisme (6) comportant un système d'engrenage (8) qui est actionné par ladite unité d'entraînement et est agencé, même indirectement, en liaison avec un levier (9), qui est associé à l'une desdites mâchoires (4) et est articulé sur un pivot fixe (10), pour actionner la rotation de ladite mâchoire (4) entre lesdites configurations, ledit système d'engrenage (8) comportant une vis (11), qui est tournée, même indirectement, autour de son propre axe longitudinal par ladite unité, et un élément (12) qui est complémentaire de ladite vis (11) et est fonctionnellement associé audit levier (9), la réaction de contrainte axiale générée dans ladite configuration de serrage par ladite vis (11), qui constitue ledit élément, étant détectée par ledit capteur (7), ledit dispositif (1) comportant en outre un châssis fixe qui supporte en rotation, même indirectement, ladite vis (11) au moyen d'un ensemble de paliers (13) respectif, ledit ensemble de paliers (13) comportant au moins un premier palier (14) et au moins un palier de butée (15), afin de permettre des déplacements axiaux de ladite vis (11) produits par ladite réaction de contrainte générée dans ladite configuration de serrage, et la détection conséquente de ladite réaction de contrainte au moyen dudit capteur de force (7) agencé le long de la trajectoire de ladite vis (11) définie par lesdits déplacements axiaux, **caractérisé en ce que** ledit capteur (7) est choisi entre une jauge de contrainte et une cellule de charge et fait axialement face et est à proximité d'une première extrémité (11a) de ladite vis (11), qui se situe à l'opposé dudit levier (9), pour surveiller la force de serrage desdites électrodes (4a, 5a) au moyen de la détection des déplacements axiaux produits par ladite réaction de contrainte, ladite extrémité (11a) de ladite vis (11) étant couplée à un roulement à billes axial (17), qui est monté sur un disque de support (18) respectif et est libre de glisser axialement, le glissement axial dudit disque (18) étant mesuré par ledit capteur (7), ledit dispositif (1) comportant en outre un ensemble (20) pour régler la position axiale dudit capteur (7), afin d'identifier une pré-charge correcte et une compensation de tout jeu, ledit ensemble de réglage (20) comportant une plaque (21) pour supporter ledit capteur (7), qui est agencée à l'opposé dudit disque (18) par rapport audit capteur (7), ladite plaque de support (21) étant axialement mobile au moyen d'une vis sans tête de réglage (22) respective, jusqu'à ce que la position axiale voulue soit atteinte, et étant blocable au moyen de vis sans tête d'arrêt radiales (23) respectives.

2. Dispositif selon la revendication 1, **caractérisé en ce qu'**une plaque de centrage (19) est intercalée entre ledit capteur (7) et ledit disque (18).

3. Dispositif selon une ou plusieurs des revendications précédentes, **caractérisé en ce que** ledit système d'engrenage (8) est constitué d'une vis sphérique qui comporte ladite vis (11) et ledit élément (12), constitué d'un écrou.

4. Dispositif selon une ou plusieurs des revendications précédentes, **caractérisé en ce que** ladite unité d'entraînement est constituée d'un moteur électrique, de préférence du type moteurs sans balai, et est reliée à ladite vis (11) au moyen d'une courroie enroulée autour de l'arbre de sortie dudit moteur et autour d'une poulie (24), qui est coaxialement solidaire de ladite vis (11).
